**Europäisches Patentamt**

**European Patent Office**

**Office européen des brevets**

(11) Veröffentlichungsnummer: **0 176 890**
**B1**

(12) **EUROPÄISCHE PATENTSCHRIFT**

(45) Veröffentlichungstag der Patentschrift: **08.08.90**

(21) Anmeldenummer: **85111937.0**

(22) Anmeldetag: **20.09.85**

(51) Int. Cl.⁵: **H 05 K 7/18**, H 02 B 1/26, H 05 K 5/00

(54) Schaltschrank mit einem aus Rahmenschenkeln zusammengesetzten Rahmengestell.

(30) Priorität: **04.10.84 DE 8429153 u**

(43) Veröffentlichungstag der Anmeldung:
**09.04.86 Patentblatt 86/15**

(45) Bekanntmachung des Hinweises auf die Patenterteilung:
**08.08.90 Patentblatt 90/32**

(84) Benannte Vertragsstaaten:
**AT BE CH DE FR GB IT LI LU NL SE**

(56) Entgegenhaltungen:
**DE-U-7 833 130**
**DE-U-7 902 216**
**DE-U-8 410 106**

(73) Patentinhaber: **Rittal-Werk Rudolf Loh GmbH & Co. KG**
**Auf dem Stützelberg**
**D-6348 Herborn (DE)**

(72) Erfinder: **Bütergerds, Helmut**
**Jahnstrasse 12**
**D-6345 Eschenburg 1 (DE)**
Erfinder: **Zachrei, Jürgen**
**Am Hungersberg 2**
**D-6341 Dillenburg 8 (DE)**
Erfinder: **Debus, Jürgen**
**Am Ebersbach 50**
**D-6344 Dietzhölztal 1 (DE)**

(74) Vertreter: **Vogel, Georg**
**Hermann-Essig-Strasse 35 Postfach 105**
**D-7141 Schwieberdingen (DE)**

Courier Press, Leamington Spa, England.

## Beschreibung

Die Erfindung betrifft einen Schaltschrank mit einem aus Rahmenschenkeln zusammengesetzten, zur Frontseite hin offenen Rahmengestell, bei dem die Schranktüren an den vertikalen Rahmenschenkeln der Frontseite angelenkt und an ihren den Anlenkseiten abgekehrten Schließseiten mittels vertikal verstellbarer, auf den Innenseiten der Schranktüren angeordneter Riegelelemente in der Schließstellung festlegbar sind, wobei die Enden der Riegelelemente durch axiale Verschiebung in Führungselementen mit an den Rahmenschenkeln der Frontseite angebrachten Halteelemente in Wirkverbindung kommen und die Schranktüren am Rahmengestell festhalten.

Bei diesen bekannten Schaltschränken gibt es die verschiedensten Ausgestaltungen von Riegelelementen und Halteelementen, die aber eine stabile Schranktür erforderte, so daß in der Schließstellung die offene Frontseite auch in definierter Weise verschlossen ist.

Gerade bei Schaltschränken mit blattförmigen Schranktüren, die noch mit einem abgewinkelten Rand versehen sind, wird die dafür erforderliche Stabilität der Schranktür oft nicht erreicht. Die Folge davon ist, daß sich die Schranktür verzieht und verwindet, so daß sie in der Schließstellung meist nicht die richtige Stellung zur Frontseite des Schaltschrankes einnimmt.

Es ist Aufgabe der Erfindung, einen Schaltschrank der eingangs erwähnten Art mit einfachen Riegelelementen und Halteelementen zu versehen, die beim Schließen der Schranktür automatisch eine Ausrichtung der Schranktür vornehmen.

Diese Aufgabe wird nach der Erfindung dadurch gelöst, daß die Riegelelemente aus Flachbandmaterial bestehen und hochkant stehend in an den Schranktüren befestigten Führungselementen entsprechenden Querschnitts längsverstellbar geführt sind und daß die Enden der Riegelelemente in Gabelaufnahmen auslaufen, die auf die an den Rahmenschenkeln der Frontseite abstehend angebrachten Halteelemente aufschiebbar sind und diese mit einem Gabelarm hintergreifen.

Die Gabelarme richten beim Aufschieben auf die Halteelemente die Schranktür in einer senkrecht zur Frontseite stehenden Richtung aus, wobei hier der erforderliche Schließdruck auf die Schranktür übertragen werden kann. Diese Ausrichtung wird nach einer weiteren Ausgestaltung dadurch noch erleichtert, daß sich die durch die Gabelarme begrenzten Gabelaufnahmen zur Einführseite hin erweitern und sich im Bereich der Enden der Gabelaufnahmen auf die senkrecht zur offenen Frontseite gerichteten Abmessunen der Halteelemente verengen.

Ist nach einer Ausgestaltung vorgesehen, daß bei einem eintürigen Schaltschrank im Bereich der Ober- und Unterkante auf der Schließseite der Schranktür je ein Führungselement angebracht ist, daß die Riegelelemente als Schubstangen eines Schubstangenverschlusses ausgebildet sind, daß die Führungselemente auf der der Schranktür abgekehrten Schmalseite mittig mit einer Ausnehmung versehen sind, daß sich die Ausnehmungen jeweils über die durch die Gabelaufnahmen der Riegelelemente bestrichenen Bereiche der Führungselemente erstrecken, daß sich die Enden der sich verjüngenden Ausnehmungen auf die Abmessung eines bolzenförmigen Halteelementes verengen, daß die bolzenförmigen Halteelemente an Lagerböcken angebracht sind, die an dem der Schließseite zugeordneten vertikalen Rahmenschenkel mit horizontal ausgerichtetem Halteelement so befestigt sind, daß sie beim Schließen der Schranktür in die Ausnehmungen der Führungselemente einführbar sind und beim Verschieben der Riegelelemente in den Gabelaufnahmen derselben festlegbar sind, dann wird die Schranktür beim Schließen auch in einer zur offenen Frontseite parallelen Ebene ausgerichtet.

Die Anbringung der Halteelemente ist dabei in einfacher Weise so gelöst, daß die Lagerböcke mit den Halteelementen an der der Schranktür zugekehrten Seite eines als Hohlprofilabschnitt ausgebildeten vertikalen Rahmenschenkels befestigt sind, wobei der Rahmenschenkel in einen zur Schranktür abstehenden Schließsteg übergeht, der auf seiner Außenseite in vorgegebener Rasterung mit Befestigungsausnehmungen und Befestigungslappen versehen ist, die an einem auf den Schließsteg eingebogenen Flansch ausgestanzt sind.

Eine weitere Ausgestaltung sieht vor, daß bei einem zweitürigen Schrank an den horizontalen Innenseiten der horizontalen Rahmenschenkel der Frontseite mittig jeweils eine mit zwei Halteelementen versehene Platte befestigt ist, wobei die Halteelemente senkrecht an den horizontalen Innenseiten der horizontalen Rahmenschenkel abstehen und parallel zur Frontseite ausgerichtet sind, daß die beiden Riegelelemente der einen Schranktür als Schubstangen eines Schubstangenverschlusses ausgebildet sind, während die beiden Riegelelemente der anderen Schranktür als handbetätigte Schubriegel ausgebildet sind, und daß beim Verschieben der Riegelelemente die aus den Führungselementen herausgeführten Enden mit ihren Gabelaufnahmen auf die Halteelemente aufschiebbar sind und diese mit einem ihrer Gabelarme hintergreifen, um beide Schranktüren beim Schließen auszurichten.

Für den Ausgleich in einer zur offenen Frontseite parallelen Ebene ist zudem vorgesehen, daß die Enden der zur Mittelquerachse symmetrischen Führungselemente als Auflaufschrägen ausgebildet sind, die beim Schließen mit den Halteelementen in Wirkverbindung kommen und die Schranktür vertikal ausrichten.

Ist vorgesehen, daß die Ausnehmung der Führungselemente zur Aufnahme eines bolzenförmigen Halteelementes in der Mittelquerachse des Führungselementes angeordnet ist, dann können für Schaltschränke mit einer und mit zwei Schranktüren identische Führungselemente an den Schranktüren verwendet werden.

Damit die handbetätigten Schubriegel ihre eingestellten Stellungen beibehalten, sieht eine Weiterbildung vor, daß die als handbetätigte Schubriegel ausgebildeten Riegelelemente an ihren Schmalseiten Rastaufnahmen aufweisen, in die eine Rastfeder mit ihrem Rastende einrastet und die Öffnungs- und Schließstellung der Riegelemente festlegt. Dabei ist die Ausgestaltung vorzugsweise so, daß das Rastende der Rastfeder im Bereich der Ausnehmung des Führungselementes an der zugekehrten Schmalseite des darin geführten Riegelelementes anliegt und daß die Rastfeder an einem Bügel angebracht ist, der auf das Führungselement aufrastbar ist, wobei Rastzungen des Bügels in Bohrungen des Führungselementes einrasten. Der Bügel mit der Rastfeder ist dann nur auf die Führungselemente aufzustecken, in denen ein handbetätigter Schubriegel als Riegelelement geführt ist.

Für die Halteelemente an den horizontalen Rahmenschenkeln ist eine Ausgestaltung von Vorteil, die dadurch gekennzeichnet ist, daß die Halteelemente an der Platte als U-förmige Bügel abgebogen sind, wobei die geschlossenen Seiten der Bügel der an den horizontalen Rahmenschenkeln angebrachten Halteelemente gegeneinander gerichtet sind.

Die Anbringung der Platten an den horizontalen Rahmenschenkeln wird nach einer Ausgestaltung dadurch vereinfacht, daß die Platten mit den beiden Halteelementen jeweils mittels einer einzigen Schraube an dem zugeordneten horizontalen Rahmenschenkel befestigt sind, wobei abgebogene Lappen in Durchbrüche der Rahmenschenkel ragen und die Platten unverdrehbar festlegen. Die Durchbrüche im Rahmenschenkel sind aus Befestigungsgründen schon vorhanden.

Einen dichten Abschluß der Schranktüren im Bereich der Halteelemente an den horizontalen Rahmenschenkeln wird nach einer Ausgestaltung dadurch erreicht, daß zwischen den beiden Halteelementen jeweils ein elastischer Abdeckblock auf den Schließsteg des horizontalen Rahmenschenkels aufgesteckt ist, der in Schlitzen einen abgewinkelten Rand der Schranktür aufnimmt.

Die Erfindung wird anhand verschiedener, in den Zeichnungen dargestellter Ausführungsbeispiele näher erläutert. Es zeigt

Fig. 1 eine Teilansicht mit einem an einem vertikalen Rahmenschenkel angebrachten Halteelement und einem als Schubstange ausgebildeten Riegelelement an einer Schranktür in der Öffnungsstellung,

Fig. 2 einen der Fig. 1 entsprechenden Teilschnitt, bei dem sich das Riegelelement in Schließstellung befindet,

Fig. 3 einen Teilquerschnitt, der die Wirkverbindung zwischen dem Halteelement und dem Riegelelement mit Gabelaufnahme erkennen läßt,

Fig. 4 eine Teilansicht eines unteren horizontalen Rahmenschenkel eines Schaltschrankes mit zwei Halteelementen zur Festlegung von zwei Schranktüren,

Fig. 5 einen Teilschnitt mit einem als handbetätigter Schubriegel ausgebildeten Riegelelement in Schließstellung, das in zwei rastende Stellungen einstellbar ist und mit einem Halteelement an dem unteren horizontalen Rahmenschenkel zusammenwirkt, und

Fig. 6 einen der Fig. 5 entsprechenden Teilschnitt, bei dem das Riegelelement in der Öffnungsstellung gehalten ist.

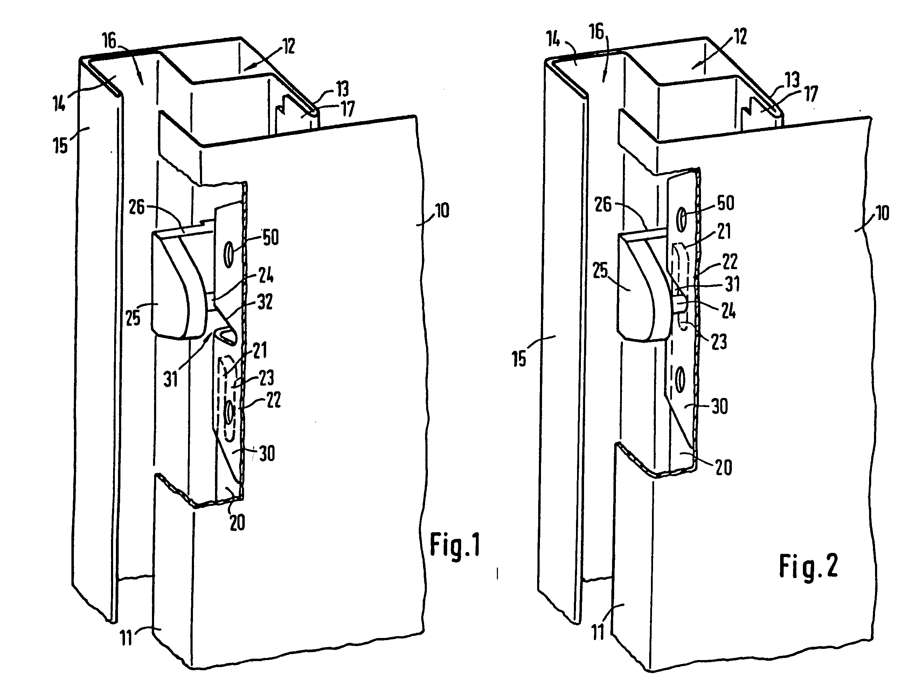

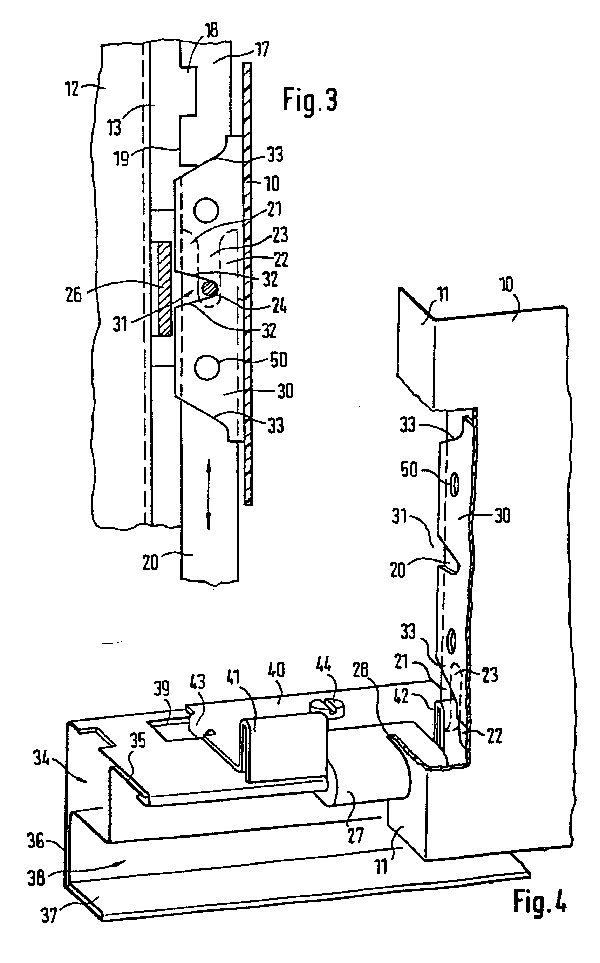

Bei dem Ausführungsbeispiel nach den Fig. 1 bis 3 ist die Frontseite des Rahmengestelles mittels einer Schranktür 10 verschlossen, die an ihren Seiten den abgewinkelten Rand 11 aufweist. Die als Hohlprofilabschnitte ausgebildeten Rahmenschenkel bilden im Bereich der offenen Frontseite einen Rahmen, der umlaufend einen Schließsteg 13 bildet, der senkrecht am Rahmen absteht. Am rechten vertikalen, nicht dargestellten Rahmenschenkel ist die Schranktür 10 mittels Scharnieren in bekannter Weise angelenkt. Die Schließseite der Schranktür 10 ist in bekannter Weise mittig mit einem Schubstangenverschluß versehen, der auf die verschiedenste Art ausgebildet sein kann, aber zwei Schubstangen als Riegelelemente 20 aufweist, die in Richtung zu den horizontalen Rahmenschenkeln der Frontseite des Rahmengestelles verstellt werden, wenn der Schubstangenverschluß die Schranktür 10 in Schließstellung festhalten soll.

Beim Öffnen des Schubstangenverschlusses werden die Schubstangen in Richtung von den horizontalen Rahmenschenkeln weg verstellt. Die Schubstangen sind im Bereich der Oberkante und längsverstellbar geführt. Die Schubstangen bestehen dabei aus Flachbandmaterial und sind in den auf der Innenseite der Schranktür 10 befestigten Führungselementen 30 mit entsprechendem Querschnitt geführt.

Die als Schubstangen ausgebildeten Riegelelemente 20 laufen in Gabelaufnahmen 23 aus, die sich zur Einführseite hin erweitern, wie die beiden Gabelarme 21 und 22 erkennen lassen. Die Führungselemente 30 weisen an den der Schranktür 10 abgekehrten Schmalseite Ausnehmungen 31 auf, die sich über den Bereich erstrecken, der durch die Gabelaufnahme 23 beim Verstellen des Riegelelementes 20 bestrichen wird. Die Ausnehmungen verjüngen sich auf eine Breite, die durch die Abmessung des bolzenförmigen Halteelementes 24 gegeben ist, das in entsprechender Anordnung horizontal ausgerichtet und abstehend an dem vertikalen Rahmenschenkel 12 angebracht ist. Beim Schließen der Schranktür 10 wird daher beim Einführen des Halteelementes 24 in die Ausnehmungen 31 des Führungselementes 30 durch die Seitenwände 32 der Ausnehmungen 31 das Halteelement 24 und damit die Schranktür 10 in einer zur Frontseite parallelen Ebene ausgerichtet.

Das Halteelement 24 ist an einem Lagerbock angebracht, das mit der Grundplatte 26 an dem vertikalen Rahmenschenkel 12, der als Hohlprofilabschnitt ausgebildet ist, angebracht ist. Die Seitenplatten 25 halten das bolzenförmige Halteelement 24 in vorgegebenem Abstand zur Grundplatte 26, so daß der Gabelarm 21 beim Verschieben des Riegelelementes 20 als Halteelement 24 hintergreifen kann. Die Gabelaufnahme 23 ist am Ende auf den Durchmesser des Halteelementes 24 abgestimmt, so daß in der Schließstellung des Riegelelementes 20 die Schranktür 10 auch senkrecht zur offenen Frontseite des Rahmengestelles ausgerichtet wird. Die Schranktür 10 wird auf der Schließseite sowohl an der Oberkante als auch an der Unterkante ausgerichtet.

Der Schließsteg 13 des vertikalen Rahmenschenkels 12 hat einen auf die Außenseite eingebogenen Flansch 17, der in vorgegebener Rasterung mit Befestungsausnehmungen 18 und Befestigungslappen 19 versehen ist, die vor dem Einbiegen durch Stanzen hergestellt sind. Die Lagerböcke mit den Halteelementen 24 können daher in dieser Rasterteilung definiert mit dem vertikalen Rahmenschenkel 12 verbunden werden. Die Führungselemente 30, die in der Quermittelachse symmetrisch und mit der Ausnehmung 31 versehen sind, werden so an der Schranktür 10 befestigt, daß die Ausnehmungen 31 einen Abstand zueinander einnehmen, der einem ganzzahligen Vielfachen dieser Rasterteilung entspricht. Die Lagerböcke sind an einer Seitenplatte mit auf die Rasterteilung abgestimmten Ansätzen bzw. Absätzen versehen, so daß sie nur in der Rasterteilung mit dem horizontalen Rahmenschenkel 12 verbunden werden können.

Auf der Außenseite des Rahmenschenkels 12 bilden die Stege 14 und 15 eine Aufnahme 16, in die der Rand 11 der Schranktür 10 eingeführt werden kann.

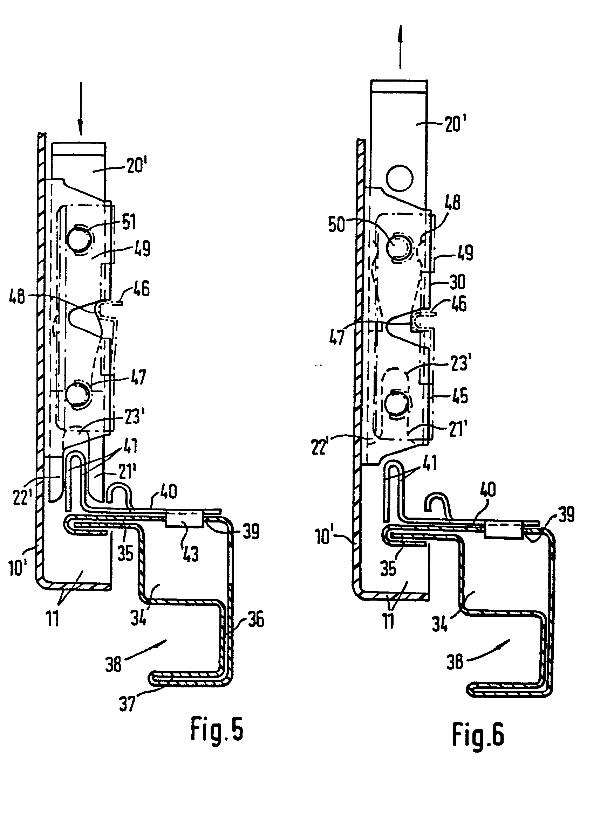

Die Fig. 4 zeigt eine Teilansicht eines zweitürigen Schaltschrankes und zwar den unmittelbaren Teil des unteren, horizontalen Rahmenschenkels 34, der wie die Bezugszeichen 35, 36, 37 und 38 zeigt, identisch ausgebildet ist wie die vertikalen Rahmenschenkel 12. Die innere, horizontale Seitenwand des Hohlprofilabschnittes ist mit einer Reihe von Durchbrüchen 39 versehen. In der Mitte der horizontalen Rahmenschenkel 34 wird eine Platte 40 angeschraubt, die mit Lappen 43 in die Durchbrüche 39 eingreift und so trotz Befestigung mit nur einer einzigen Schraube 44 unverdrehbar gehalten ist. Die Platte 40 weist zwei Halteelemente 41 und 42 auf, die als U-förmige Bügel an der Platte 40 abgebogen sind. Diese Bügel stehen senkrecht an den horizontalen Innenseiten der horizontalen Rahmenschenkel 34 ab und sind parallel zur Frontseite des Rahmengestelles ausgerichtet, so daß die Gabelaufnahme 23 eines als Schubstange ausgebildeten Riegelementes 20 auf einen Bügel aufgeschoben werden kann. Dabei untergreift der Gabelarm 21 wieder das Halteelement 42, wie auf der rechten Seite der Fig. 4 gezeigt ist. Die Enden der zur Mittelquerachse symmetrischen Führungselemente 30 sind als Auflaufschrägen 33 ausgebildet, die beim Schließen der Schranktür 10 mit den Halteelementen 42 in Wirkverbindung kommen und die Schranktür 10 in einer zur Frontseite parallelen Ebene ausrichten.

Zwischen den beiden Halteelementen 41 und 42 ist ein elastischer Abdeckblock 27 mit Schlitzen 28 auf die horizontalen Rahmenschenkel 34 aufgeschoben, so daß der Rand 11 der Schranktür 10 abgedichtet am horizontalen Rahmenschenkel 34 anliegt. Die Schranktür 10 wird in ähnlicher Weise im Bereich der Oberkante an dem oberen, horizontalen Rahmenschenkel der Frontseite gehalten. Die Riegelelemente 20 sind wieder als Schubstangen eines Schubstangenverschlusses ausgebildet.

Die andere Schranktür 10 trägt in gleicher Weise Führungselemente 30, in denen aber als handbetätigte Schubriegel ausgebildete Riegelemente 20' verstellbar geführt sind. Die Gabelaufnahmen 23' sind mit den Gabelarmen 21' und 22' gleich ausgebildet wie die Gabelaufnahmen 23 der Schubstangen und werden, wie Fig. 5 zeigt, auf das Halteelement 41 aufgeschoben. Die Schmalseiten der Schubriegel tragen Rastaufnahmen 47 und 48, in die das Rastende 46 einer Rastfeder 45 einrastet und die Öffnung- und Schließstellung des Schubriegels festlegt. Das Rastende 46 liegt dabei in der Ausnehmung 31 des Führungselementes 30 an der Schmalseite des Schubriegels mit den Rastaufnahmen 47 und 48 an. Die Rastfeder 45 ist an einem Bügel 49 angebracht, der auf das Führungselement 30 aufgerastet wird, wobei die Rastzungen 51 des Bügels 49 in die Bohrungen 50 des Führungselementes 30 einrasten. Diese Bügel 49 werden nur auf die Führungselemente 30 aufgerastet, in denen ein als Schubriegel ausgebildetes Riegelement 20' verstellbar geführt ist. Das Führungselement 30 mit der Ausnehmung 31, Auflaufschrägen 33 und den Bohrungen 50 ist in dieser symmetrischen Ausgestaltung universell verwendbar und kann für Riegelelemente 20 und 20' sowie an den Unter- und Oberkanten der Schranktüren 10 und 10' eingesetzt werden.

Bei dem zweitürigen Schaltschrank ist die mit dem Schubstangenverschluß versehene Schranktür 10 so ausgebildet, daß sie die mit Schubriegeln versehene Schranktür 10' teilweise überdeckt, so daß diese Schranktür 10' vor der Schranktür 10 in Schließstellung gebracht werden muß und daß sie aber erst nach dem Öffnen der Schranktür 10 geöffnet werden kann.

**Patentansprüche**

1. Schaltschrank mit einem aus Rahmenschenkeln zusammengesetzten, zur Frontseite hin offenen Rahmengestell, bei dem die Schranktüren an den vertikalen Rahmenschenkeln der Frontseite angelenkt und an ihren den Anlenkseiten abgekehrten Schließseiten mittels vertikal verstellbarer, auf den Innenseiten der Schranktüren angeordneter Riegelelemente in der Schließstellung festlegbar sind, wobei die Enden der Riegelelemente durch axiale Verschiebung in Führungselementen mit an den Rahmenschenkeln der Frontseite angebrachten Halteelementen in Wirkverbindung kommen und die Schranktüren am Rahmengestell festhalten,

dadurch gekennzeichnet,

daß die Riegelelemente (20, 20') aus Flachbandmaterial bestehen und hochkant stehend in an den Schranktüren (10) befestigten Führungselementen (30) entsprechenden Querschnitts längsverstellbar geführt sind und daß die Enden der Riegelelemente (20, 20') in Gabelaufnahmen (23) auslaufen, die auf die an den Rahmenschenkeln (12, 34) der Frontseite abstehend angebrachten Halteelemente (24, 41, 42) aufschiebbar sind und diese mit einem Gabelarm (21, 21') hintergreifen.

2. Schaltschrank nach Anspruch 1, dadurch gekennzeichnet daß sich die durch die Gabelarme (21, 22; 21', 22') begrenzten Gabelaufnahmen (23, 23') zur Einführseite hin erweitern und sich im Bereich der Enden der Gabelaufnahmen (23, 23') auf die senkrecht zur offenen Frontseite gerichteten Abmessungen der Halteelemente (24, 41, 42) verengen.

3. Schaltschrank nach Anspruch 1 oder 2, dadurch gekennzeichnet, daß bei einem eintürigen Schaltschrank im Bereich der Ober- und Unterkante auf der Schließseite der Schranktür (10) je ein Führungselement (30) angebracht ist, daß die Riegelelemente (20) als Schubstangen eines Schubstangenverschlusses ausgebildet sind, daß die Führungselemente (30) auf der der Schranktür (10) abgekehrten Schmalseite mittig mit einer Ausnehmung (31) versehen sind, daß sich die Ausnehmung (31) jeweils über die durch die Gabelaufnahmen (23) der Riegelelemente (20) bestrichenen Bereiche der Führungselemente (30) erstrecken, daß sich die Enden der sich verjüngenden Ausnehmungen (31) auf die Abmessung eines bolzenförmigen Halteelementes (24) verengen, daß die bolzenförmigen Halteelemente (24) an Lagerböcken (25, 26) angebracht sind, die an dem der Schließseite zugeordneten vertikalen Rahmenschenkel (12) mit horizontal ausgerichtetem Halteelement (24) so befestigt sind, daß sie beim Schließen der Schranktür (10) in die Ausnehmungen (31) der Führungselemente (30) einführbar sind und beim Verschieben der Riegelelemente (20) in den Gabelaufnahmen (23) derselben festlegbar sind (Fig. 1 bis 3).

4. Schaltschrank nach Anspruch 3, dadurch gekennzeichnet, daß die Lagerböcke (25, 26) mit den Halteelementen (24) an der der Schranktür (10) zugekehrten Seite eines als Hohlprofilabschnitt ausgebildeten vertikalen Rahmenschenkels (12) befestigt sind, wobei der Rahmenschenkel (12) in einen zur Schranktür (10) abstehenden Schließsteg (13) übergeht, der auf seiner Außenseite in vorgegebener Rasterung mit Befestigungsausnehmungen (18) und Befestigungslappen (19) versehen ist, die an einem auf den Schließsteg (13) eingebogenen Flansch (17) ausgestanzt sind.

5. Schaltschrank nach Anspruch 1 oder 2, dadurch gekennzeichnet, daß bei einem zweitürigen Schrank an den horizontalen Innenseiten der horizontalen Rahmenschenkel (34) der Frontseite mittig jeweils eine mit zwei Halteelementen (41, 42) versehene Platte (40) befestigt ist, wobei die Halteelemente (41, 42) senkrecht an den horizontalen Innenseiten der horizontalen Rahmenschenkel (34) abstehen und parallel zur Frontseite ausgerichtet sind, daß die beiden Riegelelemente (20) der einen Schranktür (10) als Schubstangen eines Schubstangenverschlusses ausgebildet sind, während die beiden Riegelelemente (20') der anderen Schranktür (10') als handbetätigte Schubriegel ausgebildet sind, und daß beim Verschieben der Riegelelemente (20, 20') die aus den Führungselementen (30) herausgeführten Enden mit ihren Gabelaufnahmen (23, 23') auf die Halteelemente (41, 42) aufschiebbar sind und diese mit einem ihrer Gabelarme (21, 21') hintergreifen (Fig. 4 bis 6).

6. Schaltschrank nach Anspruch 5, dadurch gekennzeichnet, daß die Enden der zur Mittelquerachse symmetrischen Führungselemente (30) als Auflaufschrägen (33) ausgebildet sind, die beim Schließen mit den Halteelementen (41, 42) in Wirkverbindung kommen und die Schranktür (10, 10') vertikal ausrichten.

7. Schaltschrank nach Anspruch 3 und 6, dadurch gekennzeichnet, daß die Ausnehmung (31) der Führungselemente (30) zur Aufnahme eines bolzenförmigen Halteelementes (24) in der Mittelquerachse des Führungselementes (30) angeordnet ist.

8. Schaltschrank nach einem der Ansprüche 5 bis 7, dadurch gekennzeichnet, daß die als handbetätigte Schubriegel ausgebildeten Riegelelemente (20') an ihren Schmalseiten Rastaufnahmen (47, 48) aufweisen, in die eine Rastfeder (45) mit ihrem Rastende (46) einrastet und die Öffnungs- und Schließstellung der Riegelelemente (20') festlegt.

9. Schaltschrank nach Anspruch 8, dadurch gekennzeichnet, daß das Rastende (46) der Rastfeder (45) im Bereich der Ausnehmung (31) des Führungselementes (30) an der zugekehrten Schmalseite des darin geführten Riegelelementes (20') anliegt.

10. Schaltschrank nach Anspruch 8 und 9, dadurch gekennzeichnet, daß die Rastfeder (45) an einem Bügel (49) angebracht ist, der auf das Führungselement (30) aufrastbar ist, wobei Rastzungen (51) des Bügels (49) in Bohrungen (50) des Führungselementes (30) einrasten.

11. Schaltschrank nach einem der Ansprüche 5 bis 10, dadurch gekennzeichnet, daß die Halteelemente (41, 42) an der Platte (40) als U-förmige Bügel abgebogen sind, wobei die geschlossenen Seiten der Bügel der an den horizontalen Rahmenschenkeln (34) angebrachten Halteelemente (41, 42) gegeneinander gerichtet sind.

12. Schaltschrank nach einem der Ansprüche 5 bis 11, dadurch gekennzeichnet, daß die Platten (40) mit den beiden Halteelementen (41, 42) jeweils mittels einer einzigen Schraube (44) an dem zugeordneten horizontalen Rahmenschenkel (34) befestigt sind, wobei abgebogene Lappen (43) in Durchbrüche (39) der Rahmenschenkel (34) ragen und die Platten (40) unverdrehbar festlegen.

13. Schaltschrank nach einem der Ansprüche 5 bis 12, dadurch gekennzeichnet, daß zwischen den beiden Halteelementen (41, 42) jeweils ein elastischer Abdeckblock (27) auf den Schließsteg (35) des horizontalen Rahmenschenkels (34) aufgesteckt ist, der in Schlitzen (28) einen abgewinkelten Rand (11) der Schranktür (10) aufnimmt.

## Revendications

1. Armoire de manoeuvre comprenant un châssis ouvert vers l'avant, composé de plusieurs "jambes" (montants et traverses (formés de profilés creux)), (armoire) dont les portes sont articulées sur les montants verticaux antérieurs et peuvent être immobilisées, en position de fermeture sur leur côté de fermeture opposé au côté articulé, au moyen d'éléments de verrouillage disposés du côté intérieur de ces portes et déplaçables verticalement, les extrémités de ces éléments de verrouillage venant coopérer, par déplacement axial dans des éléments de guidage, avec des éléments d'arrêt montés sur les profilés antérieurs et fixant la porte au châssis, armoire caractérisée en ce que les éléments de verrouillage (20, 20') sont constitués de fers plats et, disposés de chant, peuvent coulisser longitudinalement dans des éléments (30) de guidage ayant un profil correspondant et fixés dans les portes (10), et en ce que les extrémités de ces éléments de verrouillage (20, 20') forment des fourchettes à encoche (23), qui peuvent être glissées sur les éléments (24; 41, 42) d'arrêt, fixés aux profilés (montants et traverses) (12, 34) à une certaine distance de la face antérieure, et dont un bras (21, 21') s'applique par derrière contre ces éléments d'arrêt.

2. Armoire de manoeuvre selon la revendication 1, caractérisée en ce que les encoches (23, 23') des fourchettes, limitées par les dents ou bras (21, 22; 21', 22') de ces fourchettes, s'évasent vers leur extrémité d'entrée et se rétrécissent à leur extrémité intérieure à la dimension des éléments (24; 41, 42) d'arrêt, mesurée perpendiculairement à la face antérieure ouverte.

3. Armoire de manoeuvre selon la revendication 1 ou 2, caractérisée en ce que,

pour une armoire à une seule porte, un élément (30) respectif de guidage est monté, du côté de fermeture, près des bords supérieur et inférieur de cette porte (10);

les éléments de verrouillage (20) ont la conformation des barrettes d'un verrou à barrettes coulissantes;

les éléments (30) de guidage comportent une encoche (31) au milieu de leur petit côté opposé à la porte (10);

ces encoches (31) sont prolongées, au-delà de la surface des éléments (30) de guidage sur laquelle passe l'encoche (23) des éléments de verrouillage (20);

les extrémités desdites encoches (31) de largeur décroissante se rétrécissent à la dimension d'un élément (24) d'arrêt en forme de cheville;

ces éléments (24) d'arrêt en forme de chevilles sont montés, orientés horizontalement, sur des supports (25, 26) qui sont fixés au montant (12) vertical coopérant avec le côté de fermeture, de façon à pouvoir s'insérer dans les encoches (31) des éléments (30) de guidage lorsque la porte (10) est refermée, et à être retenus dans les encoches (23) des fourchettes des éléments de verrouillage (20) lorsque ces derniers coulissent (figures 1 à 3).

4. Armoire de manoeuvre selon la revendication 3, caractérisée en ce que les supports (25, 26) portant les éléments (24) d'arrêt sont fixés sur le côté, tourné vers la porte (10), d'un montant (12) formé d'un profilé creux, ce montant (12) se terminant par une aile (13) de fermeture, disposée à une certaine distance de la porte (10), qui comporte à son extrémité extérieure des encoches (18) et languettes (19) de fixation ayant une disposition prédéterminée et découpées dans un rebord (17) rabattu sur cette aile (13) de fermeture.

5. Armoire de manoeuvre selon la revendication 1 ou 2, caractérisée en ce que

dans une armoire à deux portes, une plaque (40), comportant deux éléments (41, 42) d'arrêt est fixée au milieu de la partie intérieure du côté horizontal de chacune des traverses (34) antérieures, ces éléments (41, 42) d'arrêt partant perpendiculairement de ces côtés horizontaux des traverses (34) et étant orientés parallèlement à la face antérieure;

les deux éléments de verrouillage (20) de l'une des portes (10) ont la conformation des barrettes d'un verrou à barrettes coulissantes, tandis que les deux éléments de verrouillage (20') de l'autre porte (10') ont la conformation de targettes manoeuvrées manuellement; et

lorsque ces éléments de verrouillage (20, 20') sont déplacés, les encoches (23, 23') des fourchettes de leurs extrémités faisant saillie des éléments (30) de guidage peuvent venir chevaucher les éléments (41, 42) d'arrêt et l'un (21, 21') des bras de ces fourchettes s'applique par derrière contre l'élément d'arrêt respectif (figures 4 à 6).

6. Armoire de manoeuvre selon la revendication 5, caractérisée en ce que les extrémités des éléments (30) de guidage, lesquels sont symétriques par rapport à leur axe transversal, ont la configuration de rampes (33) ascendantes, qui viennent coopérer pendant la fermeture avec les éléments (41, 42) d'arrêt et alignent verticalement les portes (10, 10').

7. Armoire de manoeuvre selon les revendications 3 et 6, caractérisée en ce que l'encoche (31) d'un élément (30) de guidage est formée dans l'axe transversal de cet élément (30) pour loger un élément (24) d'arrêt en forme de cheville.

8. Armoire de manoeuvre selon l'une des revendications 5 à 7, caractérisée en ce que les éléments de verrouillage (20') constitués de targettes manoeuvrables manuellement, comportent sur leurs petits côtés des crans (47, 48), dans lesquels l'extrémité (46) d'un ressort (45) d'encliquetage s'engage et détermine les positions d'ouverture et de fermeture de ces éléments de verrouillage (20').

9. Armoire de manoeuvre selon la revendication 8, caractérisée en ce que l'extrémité (46) du ressort (45) d'encliquetage est appliquée, à l'emplacement de l'encoche (31) de l'élément (30) de guidage contre le petit côté adjacent de l'élément de verrouillage (20') qui coulisse dans cet élément de guidage.

10. Armoire de manoeuvre selon les revendications 8 et 9, caractérisée en ce que le ressort (45) d'encliquetage est monté sur un étrier (49), qui peut être retenu sur l'élément (30) de guidage, des dents (51) de cet étrier (49) s'engageant dans des trous (50) de cet élément (30) de guidage.

11. Armoire de manoeuvre selon l'une des revendications 5 à 10, caractérisée en ce que les éléments (41, 42) d'arrêt de la plaque (40) sont repliés en U en forme d'étriers, les flancs pleins de ces étriers des éléments (41, 42) de la traverse (34) horizontale étant accolés.

12. Armoire de manoeuvre selon l'une des revendications 5 à 11, caractérisée en ce que chacune des plaques (40) comportant les deux éléments (41, 42) d'arrêt est fixée à la traverse (34) horizontale respective au moyen d'une seule vis (44), des languettes (43) repliées s'engageant dans des découpures (39) de cette traverse (34) et immobilisant les plaques (40) pour interdire une rotation de ces plaques (40).

13. Armoire de manoeuvre selon l'une des revendications 5 à 12, caractérisée en ce qu'un bloc (27) élastique de recouvrement, qui loge dans des fentes (28) un rebord (11) replié de la porte (10), est fixé sur l'aile (35) de fermeture de la traverse (34) horizontale.

## Claims

1. Switch cabinet with a frame composed of several posts and open at the front side, with cabinet doors hinged to the vertical frame posts at the front and fixable in the closing position at the closing sides opposite to the hinge sides by means of vertically adjustable bolt elements located at the inner door sides, whereby the ends of the bolt elements achieve linkage with holder elements attached to the frame posts of the front side via axial displacement in guide elements and retain the cabinet doors in the frame,
characterised by the fact,
that the bolt elements (20, 20') consist of flat strip material and are vertically led in longitudinally adjustable guide elements (30) of the required cross section attached to the cabinet doors (10) and that the ends of the bolt elements (20, 20') finish in fork retainers (23) which can be slid onto the holder elements (24, 41, 42) attached projecting from the front side frame posts (12, 34), and which grip it with a forked arm (21, 21').

2. Switch cabinet according to claim 1, characterised by the fact, that the fork retainers (23, 23') limited by the fork arms (21, 22; 21', 22') expand towards the entrance side and narrow in the area of the end of the fork retainers (23, 23') according to the perpendicular dimensions of the holder elements (24, 41, 42) facing towards the open front side.

3. Switch cabinet according to claim 1 or 2, characterised by the fact, that for a one-door switch cabinet one guide element (30) each is attached to the closing side of the cabinet door (10) in the area of upper and lower edge,
that the bolt elements (20) are formed as the connecting rods of a connecting rod lock,
that the guide elements (30) on the narrow side turned away from the cabinet door (10) have a centrally located recess (31),
that the recess (31) extends respectively over the areas of the guide elements (30) swept by the fork retainers (23) of the bolt elements (20),
that the ends of the tapering recesses (31) narrow to the dimensions of a bolt-shaped holder element (24),
that the bolt-shaped holder elements (24) are attached to brackets (25, 26), which are fixed with horizontally aligned holder elements (24) to vertical frame posts (12) aligned on the closing side in such a way, that on closing the cabinet door (10) they can be introduced into the recesses (31) of the guide elements (30) and that on sliding the bolt elements (20) they are fixable (Figs 1 to 3) into the fork retainers (23) of the latter.

4. Switch cabinet according to claim 3, characterised by the fact, that the brackets (25, 26) with the holder elements (24) are fixed to a vertical frame post (12) shaped as a hollow profile section on the side facing towards the cabinet door (10), whereby the frame post (12) runs into a closing link (13) projecting towards the cabinet door (10), which is equipped with fastening recesses (18) and fastening tabs (19) on its outer side in a given pattern, which are punched out to a bent-in flange (17) on the closing link (13).

5. Switch cabinet according to claim 1 or 2, characterised by the fact, that for a two-door cabinet, a plate (40) equipped with two holder elements (41, 42) respectively is centrally fixed to the horizontal inner side of the horizontal frame posts (34) at the front side, whereby the holder elements (41, 42) project perpendicular to the horizontal inner sides of the horizontal frame posts (34) and are aligned parallel to the front side,
that both bolt elements (20) of the one cabinet door (10) are shaped as connecting rods of a connecting rod lock, while both bolt elements (20') of the other cabinet door (10') are shaped as manually operated sliding bolts, and that when sliding the bolt elements (20, 20') the ends that lead out of the guiding elements (30) can be slid onto the holder elements (41, 42) with their fork retainers (23, 23') and that they grip it with their forked arms (21, 21') (Figs 4 to 6).

6. Switch cabinet according to claim 5, characterised by the fact, that the ends of the guide elements (30) symmetrical to the middle lateral axis are shaped as angled buffers (33), which come into linkage with the holder elements (41, 42) during closing and align the cabinet door (10, 10') vertically.

7. Switch cabinet according to claims 3 and 6, characterised by the fact, that the recess (31) of the guide elements (30) is located in the middle lateral axis of the guide element (30) to receive a bolt-shaped holder element (24).

8. Switch cabinet according to one of the claims 5 to 7, characterised by the fact, that the bolt element (20') formed as a manually actuated sliding bolt has catching retainers (47, 48) on its narrow sides in which a catch spring (45) engages with its catch end (46) and determines the opening and closing position of the bolt elements (20').

9. Switch cabinet according to claim 8, characterised by the fact, that the catch end (46) of the catch spring (45) is in contact in the area of the recess (31) of the guide element (30) at the facing narrow side of the bolt element (20') lead within it.

10. Switch cabinet according to claims 8 and 9, characterised by the fact, that the catch spring (45) is attached to a shackle (49), which can be clipped onto the guide element (30), whereby snap-in pins (51) on the shackle (49) clip into drillings (50) of the guide element (30).

11. Switch cabinet according to one of the claims 5 to 10, characterised by the fact, that the holder elements (41, 42) on the plate (40) are bent as U-shaped shackles, whereby the closed sides of the shackles of the holder elements (41, 42) attached to the horizontal frame posts (34) are set opposite each other.

12. Switch cabinet according to one of the claims 5 to 11, characterised by the fact, that the plates (40) with both holder elements (41, 42) are each fixed to the respective horizontal frame posts (34) using a single screw (44), whereby bent tabs (43) project into openings (39) of the frame posts (34) and fix the plates (40) so that they cannot be rotated.

13. Switch cabinet according to one of the claims 5 to 12, characterised by the fact, that one elastic covering block (27) each is attached on the closing link (35) of the horizontal frame post (34) between the two holder elements (41, 42), which receive the angled edge (11) of the cabinet door (10) in grooves (28).

Fig.2

Fig.1

**Fig.3**

**Fig.4**

Fig.5

Fig.6